## Europäisches Patentamt
## European Patent Office
## Office européen des brevets

(11) Veröffentlichungsnummer: **0 140 101**
**B1**

(12) **EUROPÄISCHE PATENTSCHRIFT**

(45) Veröffentlichungstag der Patentschrift:
**08.04.87**

(21) Anmeldenummer: **84110931.7**

(22) Anmeldetag: **13.09.84**

(51) Int. Cl.⁴: **C 07 C 91/04,** C 07 C 89/00,
C 09 D 7/12, C 09 D 3/84

(54) **Titanchelate und Zubereitungen, die diese Chelate enthalten.**

(30) Priorität: **12.10.83 DE 3337098**

(43) Veröffentlichungstag der Anmeldung:
**08.05.85 Patentblatt 85/19**

(45) Bekanntmachung des Hinweises auf die Patenterteilung:
**08.04.87 Patentblatt 87/15**

(84) Benannte Vertragsstaaten:
**BE DE FR GB NL**

(56) Entgegenhaltungen:
**DE-B-2 012 924
GB-A-922 456**

**DR.H.KITTEL "Lehrbuch der Lacke und
Beschichtungen", Bang III, "Lösemittel,
Weichmacher, Additive, Zwischenprodukte", 1976,
VERLAG W.A. COLOMB IN DER H. HEENEMANN
GMBH, Berlin, Seiten 396-398
Du Pont Comp., TYZOR ORGANIC TITANATES,
Wilmington**

(73) Patentinhaber: **DYNAMIT NOBEL
AKTIENGESELLSCHAFT, Postfach 1261, D-5210
Troisdorf, Bez. Köln (DE)**

(72) Erfinder: **Barfurth, Dieter, Adenauerstrasse 34,
D-5210 Troisdorf- Spich (DE)**
Erfinder: **Nestler, Heinz, Dr., Rembrandtstrasse 73,
D-5210 Troisdorf- Eschmar (DE)**

**Beschreibung**

Gegenstand der vorliegenden Erfindung sind neue Titanchelate, die als Chelatbildner Acetylaceton und Triethanolamin enthalten, sowie Lösungen dieser Chelate, die mit Wasser mischbar sind.

Chelate des Titans mit Acetylaceton und Triethanolämin sind als Titanacetylacetonate oder Triethanolamintitanate bekannt. In diesen Chelaten sind an das zentrale Ti Atom zusätzlich noch zwei Alkoxygruppen gebunden. Sie liegen im allgemeinen als Lösungen in den den Alkoxygruppen entsprechenden Alkoholen vor und werden als Katalysator zu Vernetzungsreaktionen, als Beschichtungsmaterial oder als Hilfsmittel bei der Thixotropierung von Dispersionen eingesetzt.

In den Einsatzgebieten für diese bekannten Verbindungen besteht zunehmend die Forderung, diese Reagenzien in geringen Konzentrationen, vornehmlich in Konzentrationen unter 3 Gew.-% einzusetzen und das organische Lösungsmittel weitgehend durch Wasser zu ersetzen. Die an sich naheliegende Lösung dieser Forderung, die oben genannten alkoholischen Lösungen dieser Chelate mit Wasser zu verdünnen, stößt auf folgende Schwierigkeiten:

Beim einfachen Verdünnen dieser alkoholischen Lösungen mit Wasser fallen Niederschläge aus. Zur Verhinderung des Auftretens dieser Niederschläge ist zur Herstellung verdünnter Titanacetylacetonatlösungen bereits vorgeschlagen worden, vor dem Wasserzusatz die Lösungen mit der gleichen Gewichtsmenge 10 %iger Essigsäure zu versetzen, anschließend die 13 fache Menge einer 1 : 1 - Isopropanol-Wasser-Mischung hinzuzufügen und daraufhin erst mit Wasser zu verdünnen. Weitere Vorschläge geben an, entweder zunächst die doppelte Menge Methylethylketon hinzuzufügen und dann das Wasser langsam einzurühren oder das Wasser in Form einer Mischung aus 7 Teilen Wasser und 3 Teilen Isopropanol einzurühren (vgl. Firmenprospekt "TYZOR(R) ORGANIC TITANATES" Seite 23 der Firma Du Pont). Diese Lösungsmittel-Verdünnungen oder auch die Mitverwendung von Methyldiglycol als Lösungsmittel führen jedoch nicht zu einer Lösung der genannten Aufgabe, da aus solchermaßen hergestellten verdünnten wässrigen Lösungen im Laufe der Zeit immer wieder Niederschläge ausfallen oder Trübungen eintreten, die beim Einsatz der Titanchelate in den meisten Anwendungsgebieten unerwünscht sind.

Es bestand deshalb die Aufgabe, Titanchelat-Zubereitungen zur Verfügung zu stellen, die sich durch Zusatz von Wasser auf Titanchelatgehalte bis zu 1 Gew.-% verdünnen lassen, wobei die erhaltenen verdünnten wäßrigen Lösungen ohne Zusatz weiterer Stabilisatoren stabil sein sollen und auch bei längerem Stehen nicht trüb werden oder zu Ausfällungen neigen.

In Erfüllung dieser Aufgabe wurden nun neue Titanchelate gefunden, die als Chelatbildner nur Tristhanolamin und Acetylaceton enthalten.

Diese neuen Titanchelate sind hochviskose Flüssigkeiten mit Titangshalten zwischen 13 und 17 %, die in reiner Form aufgrund ihrer hohen Viskosität schwer zu handhaben sind. Sie sind gut in Wasser löslich und diese Lösungen sind, sofern sie nicht zu verdünnt sind, gut haltbar. So zeigen z.B. 50 %ige wässrige Lösungen dieser neuen Chelate nach einer Lagerzeit von mehreren Wochen keine Trübungen oder Ausfällungen von Niederschlägen. Erst bei sehr großen Verdünnungen mit Wasser bei Chelatgehalten von einigen Prozenten fallen nach einer Lagerung von mehreren Wochen Niederschläge aus.

Die neuen Titanchelate sind jedoch auch in Glycolethern sehr gut löslich. Überraschenderweise bewirken Glycolether eine außerordentliche Verbesserung der Stabilität von wäßrigen Lösungen dieser neuen Titanchelate, so daß Gemische dieser Titanchelate mit bereits 1 Gew.-% an Glycolethern beim Verdünnen mit Wasser Lösungen ergeben, die auch in großer Verdünnung bei Chelatgehalten zwischen 1 und 5 Gew.-% eine verbesserte Stabilität dieser Lösungen ergeben.

Bevorzugte Lösungen der neuen Titanchelate in Glycolethern sind solche Lösungen, deren Titanchelatgehalt zwischen 50 und 80 Gew.-% liegt. Solche Lösungen sind auch nach einem Verdünnen mit Wasser bis zu einem Chelatgehalt von etwa 1 Gew.-% sehr stabil; sie weisen eine vorzügliche Verträglichkeit mit vielen Harzsystemen auf, die mit den bisher bekannten Titanverbindungen sofort zu Niederschlägen oder Trübungen führten. Sie sind ebenfalls verträglich mit Ammoniak, Triethanolamin oder 2-Amino-2-methylpropanol, d.h. mit Verbindungen, die als typische Neutralisationsmittel bei der Herstellung von Wasserlacken dienen.

Die Herstellung der neuen Titanchelate oder deren Glycoletherlösungen kann auf verschiedene Weise erfolgen. Sie erfolgt entweder durch Umsetzung von Tetraalkoxytitanaten mit Acetglaceton und Triethanolamin im stöchiometrischen Verhältnis und anschließendem Abtrennen des dabei abgespaltenen Alkohols, vorzugsweise durch Destillation in Gegenwart von Glecolethern. Unter stöchiometrischem Verhältnis wird dabei die Menge an Chelatbildner verstanden, die notwendig ist, um alle Alkoxygruppen des als Ausgangsmaterial dienenden Titanesters in Form des entsprechenden Alkohols abzuspalten. Dabei kann das Verhältnis von Acetylaceton zu Triethanolamin beliebig sein; bevorzugt beträgt es 1 : 1.

Bei dieser Herstellungsart können als Ausgangsprodukte die bekannten Titanester eingesetzt werden, wobei zur besseren Abtrennung des Alkohols die Esterkomponente möglichst kurzkettig sein sollte. Beispiele für einsetzbare Titanester sind Tetra-ethyltitanat, Tetra-n-butyltitanat, Tetra-isobutyl-titanat, Tetra-n-propyltitanat oder Tetra-isopropyltitanat.

Die Herstellung der neuen Titanchelat-Zubereitungen kann aber auch durch Vermischen von Dialkoxy-bisacetylacetonaten mit Dialkoxy-di(triethanolamin)-titanaten und anschließendem Abtrennen des dabei abgespaltenen Alkohols in Gegenwart von Glycolethern erfolgen. Das Abtrennen des Alkohols erfolgt dabei in gleicher Weise wie bei der oben genannten Herstellungsweise.

Da bei dieser Herstellungsweise die als Ausgangsprodukte eingesetzten Titanchelate, deren Alkoxygruppen die gleichen sein können wie bei den oben genannten Titanestern, im allgemeinen als Lösungen in denjenigen Alkoholen vorliegen, die der Alkoxygruppe entsprechen, muß das Abdestillieren des Alkohols solange fortgesetzt werden, bis nicht nur der ursprünglich gebundene, sondern der auch als Lösungsmittel eingesetzte Alkohol möglichst weitgehend abdestilliert ist.

Zweckmäßigerweise erfolgt die Abdestillation des Alkohols bei beiden gezeigten Durchführungsformen der Herstellung der neuen Zubereitungen in Gegenwart von soviel Glycolether, wie zur Herstellung der Lösungen mit den gewünschten Konzentrationen erforderlich ist.

Unter Glycolethern im Sinne der vorliegenden Erfindung sollen sowohl Monoglycolether als auch Polyglycolether verstanden werden. Die entsprechende allgemeine Formel dafür ist $HO-[CH_2-CH_2-O]_n-R$, wobei R für Alkylreste mit 1 bis 4 C-Atomen steht und n Werte zwischen 1 und 8, vorzugsweise zwischen 1 und 4 annehmen kann. Beispiele für solche Glycolether sind Glycol-monomethylether, Glycol-monoethylether, Glycol-monobutylether, Diglycol-monomethylether, Diglycol-monoethylether und Diglycol-monobutylether.

Anstelle der Hydroxylgruppen in der oben genannten Formel kann auch eine R'-C(O)O-Gruppe stehen, in der R' für eine Alkylgruppe mit 1 bis 3 C-Atomen steht. Beispiele für solche, auch als Glycoletherester bezeichnete Verbindungen sind Glycol-monomethyletheracetat oder Diglycol-monobutyletheracetat. Allgemein werden diese Glycoletherester auch als Alkylglycolcarboxylate bezeichnet.

Die erfindungsgemäßen Titanchelat-Zubereitungen lassen sich auf allen Gebieten einsetzen, auf denen die katalytische, vernetzende oder schichtbildende Wirkung von Titanaten erwünscht ist: insbesondere werden diese neuen Zubereitungen dort mit Erfolg eingesetzt, wo es auf die Eigenschaften Hydrolysestabilität, gute Wasserlöslichkeit und gute Vertraglichkeit mit Substanzen oder Reaktionskomponenten ankommt.

**Beispiel 1**

Herstellung einer 50 %igen Lösung von Acetylaceton-Triethanolamin-Titanat-(1:1:1) in Methyldiglycol(2-(2-methoxy-ethoxy)ethanol], ausgehend von Isopropyltitanat

a)

In einen 1 l-Kolben mit Rührer, Thermometer, Tropftrichter und Rückflußkühler werden 284 g Isopropyltitanat (1 Mol) vorgelegt und unter Rühren portionsweise zunächst mit 100 Acetylaceton (Pentandion-2,4; 1 Mol) und anschließend mit 149 g Triethanolamin (2,2', 2''-Nitrilotriethanol, 1 Mol) versetzt. Die sich dabei auf ca. 70 C erwärmende Reaktion mischung wird durch zusätzliche Wärmezufuhr 30 Minuten zum Sieden am Rückfluß erhitzt.

b)

Nach Abkühlen auf 50°C werden zu der Reaktionsmischung 293 g Methyldiglycol [2-(2-methoxy-ethoxy-)ethanol] zugegeben und aus der Lösung der bei der Reaktion nach a) entstandene Isopropylalkohol durch Destillation entfernt. Ausbeute an Isopropylalkohol: 235,5 g ($\doteq$ 98,1 % der Theorie). Es werden 590,5 g einer dunkelrotbraunen Flüssigkeit erhalten, die folgende Kennzahlen aufweist:

$$\text{Brechungszahl } n_{20}^{D} \qquad = 1,5160$$

Dichte bei 20 °C    = 1,201 g/ml

Viskosität bei 20 °C    = 168 mPa.s

Flammpunkt (DIN 51758)    = 90 °C

Titandioxid-Gehalt    = 13,5 %

Löslichkeit    = klar löslich in Isopropanol, Methylethylketon, Toluol oder Methylenchlorid. Solche Lösungen sind als 10 %ige Lösungen beispielsweise drei Monate stabil. Auch entsprechend wässrige Lösungen zeigen diese Stabilität.

**Beispiel 2**

Herstellung einer 50 %igen Lösung von Acetylaceton-Triethanolamin-Titanat-(1:1:1) in Methyldiglycol, ausgehend von einem Gemisch aus Titanacetylacetonat und Triethanolamintitanat

a)
In einen 1 l-Kolben mit Rührer, Thermometer und Rückflußkühler werden 242 g handelsübliches Titanacetylacetonat [75 %ige Lösung von Diisopropoxy-bis-(2,4-pentandionato)-titan in Isopropanol; ≙ 0,5 Mol] und 291 g handelsübliches Triethanolamintitanat [80 %ige Lösung von Diisopropoxy-bis (2,2',2''-Nitrilotriethanolato)-titan in Isopropanol; ≙ 0,5 Mol] vermischt und unter Rühren 30 Minuten zum Rückfluß erhitzt.

b)
Nach Abkühlen auf 50°C werden zu der Reaktionsmischung 293 g Methyldiglycol (siehe Beispiel 1) zugegeben und aus der Lösung der bei der Reaktion nach a) entstandene Isopropylalkohol durch Destillation entfernt. Ausbeute an Isopropylalkohol:237,5 g (98,0 % der Theorie). Es werden 588,5 g einer dunkelrotbraunen Flüssigkeit erhalten, die in ihren Kennzahlen dem Produkt nach Beispiel 1 entspricht.

**Beispiel 3**

Vergleich der Löslichkeit des erfindungsgemäßen Titanchelats in Wasser im Konzentrationsbereich 1 - 2,5 % mit üblichen Titanchelaten

| Produkt | Löslichkeit in entsalztem Wasser bei einer Titanchelat-Konzentration von ... | |
|---|---|---|
| | 1 % | 2,5 % |
| a) Erfindungsgemäßes Titanchelat nach Beispiel 1 oder 2 (50 %ig in Methyldiglycol) | klare Lösung | klare Lösung |
| b) Handelsübliches Titanacetylacetonat = 75 %ig in Isopropanol | sofort Bodensatzbildung | sofort Bodensatzbildung |
| c) Titanacetylacetonat gemäß b), verdünnt mit Isopropanol auf 50 % | schwach trübe Lösung | sofort Bodensatzbildung |
| d) Handelsübliches Triethanolamintitanat = 80 %ig in Isopropanol | trübe Lösung | stark trübe Lösung |
| e) Triethanolamintitanat gemäß d), verdünnt mit Isopropanol auf 50 % | trübe Lösung | stark trübe Lösung |

**Beispiel 4**

Anwendung des erfindungsgemäßen Titanchelats als vernetzendes Additiv für einen wasserverdünnten Lack auf Basis eines Phthalatharzes LR 8525

Phthalopal ® LR 8525, ein saures Phthalatharz (Hersteller BASF AG), wird nach folgender Rezeptur zu einem Klarlack umgesetzt:
250 g dieses Harzes werden in einer Mischung aus
220 g n-Propanol, 500 g Wasser und 30 g
25 %iger Ammoniaklösung aufgelöst.
Zu diesem Klarlack werden jeweils 1,5 % der in der nachstehenden Tabelle aufgeführten Titanchelate gegeben. Die so modifizierten Klarlacke zeigten folgende Beständigkeiten:

| Additiv | Aussehen des Klarlacks nach 3 Tagen Lagerung |
|---|---|
| Erfindungsgemäßes Titanchelat * | klar (auch nach 6 Wo. Lagerung) |
| Handelsübliches Titanacetylacetonat | klar, leicht gelblich |
| Handelsübliches Triethanolamintitanat | trübe |

(* als 50 %ige Lösung in Methyldiglycol)

Die vernetzende Wirkung der Titanchelat-Additive wurde nach Aufziehen des entsprechenden Klarlacks auf entfettetes Aluminium und Einbrennen bei 150° C (45 Minuten) mittels des MEK-Test geprüft:

Die Zahl der Reibungen mit einem Methylethylketon-getränkten Lappen, die notwendig ist, um den Lackfilm abzulösen, gilt als Maß für die Vernetzung der Lackschicht. Folgende Werte wurden ermittelt:

| | |
|---|---|
| Klarlack ohne Zusatz | 1 Reibung |
| Klarlack + Titanchelat nach Beispiel 1 | 64 Reibungen |
| Klarlack + Titanacetylacetonat gemäß Beispiel 3 b) | 14 Reibungen |
| Klarlack + Triethanolamintitanat gemäß Beispiel 3 d) | 71 Reibungen |

**Beispiel 5**

Anwendung des erfindungsgemäßen Titanchelats als vernetsendes Additiv für ein wasserverdünntes Bindemittel auf Polyacrylatbasis

Die Lacklösung, die zur Prüfung der Verträglichkeit und de Vernetzungswirkung dient, wird durch Verdünnen eines im Handel erhältlichen Polyacrylatharzes (BAYCRYL ® DA 50) mit Wasser im Verhältnis 1 : 1 hergestellt: Zu dieser Lacklösung werden jeweils 2,5 % der nachstehend aufgeführten Titanchelate gegeben. Die so modifizierten Lösungen zeigten folgende Beständigkeiten:

| Additiv | Aussehen des Klarlacks nach 3 Tg. Lagerung |
|---|---|
| Erfindungsgemäßes Titanchelat (50 %ige Lösung) | klar (auch nach 6 Wo. Lagerung) |
| Handelsübliches Titanacetylacetonat gemäß Beispiel 3 b) | sofort nach Zugabe trübe |
| Handelsübliches Triethanolamintitanat gemäß Beispiel 3 d) | sofort nach Zugabe trübe |

Die vernetzende Wirkung des erfindungsgemäßen Titanchelats zeigt sich nach Einbrennen einer auf Aluminium aufgezogenen Klarlack-Schicht bei 200 °C/13 Minuten: Die Beständigkeit gegen Methylethylketon (Beschreibung des Tests siehe Beispiel 4) erhöht sich von 1 Reibung beim reinen Klarlack auf 60 Reibungen bei der oben genannten Mischung mit 2,5 % des erfindungsgemäßen Titanchelats.

**0 140 101**

**Patentansprüche**

1. Chelate des vierwertigen Titans, dadurch gekennzeichnet daß sie als Chelatbildner nur Acetylaceton und Triethanolamin enthalten.

2. Chelate des Titan (IV) gemäß Anspruch 1, dadurch gekennzeichnet, daß das Molverhältnis von Acetylaceton und Triethanolamin 1 :1 beträgt.

3. Lösungen von Titan (IV)-chelaten gemäß Anspruch 1 oder 2 in Glycolethern mit Anteilen dieser Chelate zwischen 10 und 99 Gew.-%, vorzugsweise zwischen 50 und 80 Gew. %

4. Lösungen von Titan (IV)-chelaten gemäß Anspruch 3, dadurch gekennzeichnet, daß sie als zusätzliches Lösungsmittel Wasser in einer solchen Menge enthalten, daß der Chelatgehalt in den Lösungen zwischen 1 und 5 Gew.-% beträgt.

5. Verfahren zur Herstellung von Lösungen gemäß Anspruch 3, dadurch gekennzeichnet, daß man ein Tetraalkoxytitanat (IV) mit Acetylaceton und Triethanolamin im stöchiometrischen Verhältnis zur Reaktion bringt und das erhaltene Reaktionsprodukt in Gegenwart von Glycolethern solange erhitzt, bis der bei der Reaktion abgespaltene Alkohol weitgehend abdestilliert ist.

6. Verfahren zur Herstellung von Titanchelatlösungen gemäß Anspruch 3, dadurch gekennzeichnet, daß man Dialkoxydiacetylacetontitanat und Dialkoxy-bis-(triethanolamino)-titanat mischt und das erhaltene Gemisch anschließend in Gegenwart von Glycolethern solange erhitzt, bis der abgespaltene Alkohol und gegebenenfalls als Lösungsmittel vorhandene Alkohol weitgehend abdestilliert ist.

7. Verwendung von Lösungen gemäß Anspruch 3 oder 4 zu Katalysen und Reaktionen in wäßrigen Systemen.

**Claims**

1. Chelates of tetravalent titanium, characterised in that they contain only acetyl acetone and triethanolamine as chelate formers.

2. Chelates of titanium (IV) according to claim 1, characterised in that the molar ratio of acetyl acetone and triethanolamine amounts to 1 : 1.

3. Solutions of titanium (IV) chelates according to claim 1 or 2, in glycol ethers with the amounts of these chelates being between 10 and 99% by weight, preferably between 50 and 80% by weight.

4. Solutions of titanium (IV) chelates according to claim 3, characterised in that they contain water as additional solvent in such an amount that the chelate content in the solutions amounts to between 1 and 5% by weight.

5. Process for the production of solutions according to claim 5, characterised in that a tetralkoxytitanate (IV) is reacted with acetyl acetone and triethanolamine in stoichiometric ratio and the reaction product obtained is heated in the presence of glycol ethers until the alcohol split off in the reaction is largely distilled off.

6. Process for the preparation of titanium chelate solutions according to claim 3, characterised in that dialkoxydiacetyl acetone titanate and dialkoxy-bis-(triethanolamino)-titanate are mixed and the mixture obtained is then heated in the presence of glycol ethers until the alcohols split off and possibly alcohol present as solvent is largely distilled off.

7. Use of solutions according to claim 3 or 4 for catalyses and reactions in aqueous systems.

**Revendications**

1. Chélates du titane tétravalent, caractérisés en ce qu'ils ne contiennent comme générateurs de chélates, que de l'acétylacétone et de la triéthanolamine.

2. Chélates du titane (IV) selon la revendication 1, caractérisés en ce que le rapport molaire de l'acétylacétone à la triéthanolamine est de 1:1.

3. Solutions de chélates de titane (IV) selon la revendication 1 ou 2 dans des éthers de glycols comportant des proportions de ces chélates comprises entre 10 et 99 % en poids, avantageusement entre 50 et 80 % en poids.

4. Solutions de chélates de titane (IV) selon la revendication 3, caractérisées en ce qu'elles contiennent, comme solvant supplémentaire, de l'eau présent en une quantité telle que la teneur en chélates se situe dans ces solutions entre 1 et 5 % en poids.

5. Procédé pour préparer des solutions selon la revendication 3, caractérisé en ce qu'on fait réagir un titanate (IV) de tétraalkyle (tétraalcoxytitanate-IV) avec de l'acétylacétone et de la triéthanolamine selon un rapport stoechiométrique et en ce qu'on chauffe le produit de réaction ainsi obtenu en présence d'éthers de glycols jusqu'à avoir chassé dans une large mesure par distillation l'alcool scindé dans la réaction.

6. Procédé pour préparer des solutions de chélates de titane selon la revendication 3, caractérisé en ce qu'on mélange du titanate de dialcoxydiacétylacétone et du dialcoxy-bis-(triéthanolamino)-titanate et en ce qu'on chauffe ensuite le mélange ainsi obtenu en présence d'éthers de glycols jusqu'à avoir chassé par distillation dans une large mesure l'alcool scindé et l'alcool éventuellement présent comme solvant.

7. Utilisation de solutions selon la revendication 3 ou 4 pour des catalyses et des réactions dans des systèmes aqueux.